# EUROPEAN PATENT SPECIFICATION

(11) **EP 3 450 107 B1**
(45) Date of publication and mention of the grant of the patent: **18.08.2021**
(21) Application number: 17188780.5
(22) Date of filing: 31.08.2017
(51) Int. Cl.: H02P 23/00, H02P 6/06, B25B 23/147, G01L 3/00, B25B 21/00

(54) **TORQUE TOOL CONTROL ARRANGMENT**
STEUERANORDNUNG FÜR DREHMOMENTWERKZEUGE
DISPOSITIF DE COMMANDE D'OUTIL DE COUPLE

(43) Date of publication of application: 06.03.2019
(73) Proprietor: Jan OSSA trading as ZBM OSSA, 43-100 Tychy (PL); Akademia Gorniczo-Hutnicza im. Stanislawa Staszica w Krakowie, 30-059 Krakow (PL)
(72) Inventor: OSSA, Jan, 44-251 Rybnik (PL); ZAWADA, Lukasz, 43-100 Tychy (PL); OSSA, Bartosz, 43-100 Tychy (PL); PIATEK, Pawel, 31-221 Kraków (PL); PILAT, Adam, 31-234 Kraków (PL); PAULUK, Mariusz, 32-400 Myslenice (PL); MARCHEWKA, Dariusz, 30-618 Kraków (PL); BARANOWSKI, Jerzy, 32-010 Luborzyca (PL); DZIWINSKI, Tomasz, 44-217 Rybnik (PL)
(74) Representative: Malcherek, Piotr

(56) References cited:
- EP-A1- 2 127 812
- EP-A1- 2 691 211
- EP-A1- 3 045 268
- EP-A2- 3 047 943
- US-A1- 2004 182 175

## Description

### Subject of the invention

The subject of the invention is a control system for a torque tool, in particular a digitally controlled high-torque electric tool, intended for tightening and unscrewing screw connections, in particular in steel constructions, machines, chemical reactors, distillation columns, and other similar constructions and devices.

### State of the art

Electric torque tools are used to tighten or unscrew screw connections with adjustable and controllable torque. In general, such an electric tool comprises an electric motor controlled by a control unit and a gearbox coupled with a reduction gear, as well as a reaction arm and a working cap. When the torque tool is operating, it is important to accurately determine the torque at which a particular screw connection is being tightened. The commonly used electromechanical torque tools use current measurements in order to determine the torque for tightening the screw. The disadvantage of that method is the existence of errors connected with difficult to overcome phenomena which occur in the mechanical elements of the torque tool during tightening.

Moreover, US 2013/0205955 presented an electromechanical torque device, which used a torque sensor.

EP 3 045 268, which is the closest prior art, discloses a control system of a torque tool provided for tightening and unscrewing of screw connections with adjustable torque, comprising a controller of an electric motor of the torque tool, and further comprising a torque sensor. The torque sensor is configured to measure the torsional deformations of an element of a reduction gear of the torque tool transferring the torque, and moreover the torque sensor is coupled with the controller which is configured to correct the output control signal to the electric motor based on the signal from the torque sensor measuring the actual torsional deformations of the element of the reduction gear of the torque tool transferring the torque.

Very similar control systems can be anticipated from EP 2 127 812, EP 2 691 211, EP 3 047 943 or US 2004/182175.

### Aim of the invention

The purpose of the invention is to develop a system and a method of controlling an electric torque tool that would allow tightening and unscrewing of screw connections with high accuracy and torque recurrence of the tightening and unscrewing. Another purpose of the invention is to develop a system that would allow direct measurement and control over the actual torque applied to the screw connection.

### Idea of the invention

The present invention is defined in the independent claims 1, 6 with preferred embodiments disclosed in the dependent claims. According to claim 1, in the torque tool control system the torque sensor is configured to measure torsional deformations of an element of a reduction gear transferring the torque, and further the torque sensor is coupled with a controller, which controller is configured to correct the output control signal to the electric motor on the basis of the signal from the torque sensor measuring the actual torsional deformations of the element of the reduction gear of the torque tool transferring the torque. It further comprises a single control loop with regulator R that is configured to control the electric motor when the measured torque has values lower than a predefined torque threshold in order to maintain the motor speed running the gearbox at a desired speed, further comprising a cascade regulation system with regulator R1, regulator R2, and regulator R3, which are configured to control the motor when the measured torque assumes values between the predefined torque threshold and a desired torque, whereas regulator R3 is configured to monotonically decrease the difference between the desired torque and the measured torque, regulator R2 is configured to decrease the rate at which the torque increases proportionally to the difference between the measured torque and the -desired torque, and regulator R1 is configured to decrease the motor speed according to the signal from regulator R2.

It is appropriate to have the torque sensor coupled with the controller wirelessly, preferably via radio waves.

In particular, the torque sensor is in a form of a module put on the reduction gear, which module is coupled with the element of the reduction gear transferring the torque, and a measuring component of the torque sensor is fixed on a measuring sleeve seated in a movable way on the torque sensor shackle.

In another possible execution, a measuring component of the torque sensor is located on the body of the reduction gear, while an electronic circuit of the torque sensor is integrated with the reduction gear.

The most advantageous form for the measuring component of the torque_sensor is in form of a strain gauge.

In the method of controlling a torque tool the torsional deformations of the reduction gear element in the torque tool that transfers the torque is measured, while the signal from a torque sensor of the actual measurement of the torque is sent to the controller. Next, on the basis of that measurement signal, there the output signal from the controller to the electric motor running the torque tool is corrected, while in the case in which the measured torque assumes values lower than a predefined torque threshold the motor is controlled in a single control loop, in which regulator R maintains the motor speed running the reduction gear through a gearbox at a desired speed, and when the measured torque assumes values between the predefined torque threshold and a desired torque, the motor is controlled with a cascade regulation system, in which regulator R3 monotonically decreases the difference between the desired torque and the measured torque, while regulator R2 decreases the rate at which the torque increases proportionally to the difference between the measured torque and the desired torque, while regulator R1 decreases the motor speed according to the signal from regulator R2.

In the simplest embodiment, the signal from the torque sensor is sent to the controller wirelessly, preferably via radio waves.

In one of the most advantageous embodiments, torsional deformations of the reduction gear element that transfers the torque is measured with the use of a strain gauge.

It is justified to cease a tightening process when the measured torque has the value equal to the desired torque.

### Advantageous effects of the invention

The invention allows to direct measurement of the torque applied to a screw connection and allows to compare the measured torque with the torque set by the operator in the controller of the motor that runs the torque tool. It provides the possibility of making corrections by adjusting the signal which controls the motor. As a result, higher accuracy of tightening and unscrewing of screw connections has been achieved and additionally the possibility of determining, with high accuracy, the torque at which screw connections were tightened is provided. Moreover, a significantly higher recurrence of torques is provided than in the case of conventional solutions. It has been also possible to significantly decrease the cases in which screw connection are tighten with exceeded torque in comparison to the currently used torque tools. The torque sensor measures torsional deformations of the element transferring the torque and, based on that, calculates the applied torque. The torque sensor can be fixed permanently in the gearbox, in other words it can be integrated with it or, as an alternative, form a separate component fixed at the end of the gearbox in form of a cap.

### Description of drawings and embodiments

The invention is presented in more details in the attached drawings, which represent:
Fig. 1 - a schematic plan of a torque tool divided into individual main components;
Fig. 2 - a schematic section through the element of the reduction gear with the torque measuring component fixed directly on the body of the gear;
Fig. 3 - a schematic plan of the torque tool divided into individual main components in a different execution;
Fig. 4 - a schematic section through a part of the torque sensor with the torque measuring component mounted on the measuring sleeve;
Fig. 5 - a block diagram of the torque sensor;
Fig. 6 - a block diagram of the single control loop;
Fig. 7 - a block diagram of the cascade control loop;
Fig. 8 - a chart with the run function of the torque during tightening with regard to the predefined torque threshold and desired torque.

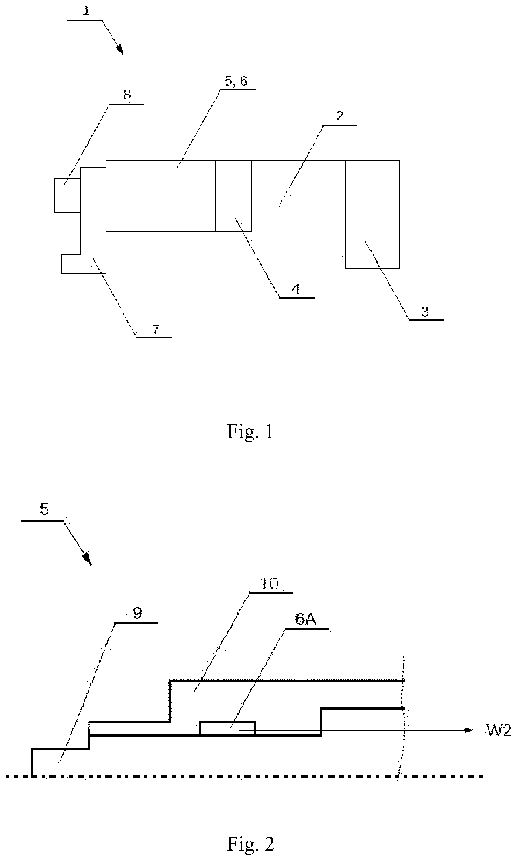

An electric torque tool 1 (Fig. 1) is provided for tightening and unscrewing of screw connections with adjustable torque and it has a motor 2 with a control system comprising a control unit - a digital controller 3. The motor 2 is connected with a gearbox 4, preferably by using a rotary joint, which provides full rotation of the body of the gearbox 4 against the body of the motor 2. In turn, the gearbox 4 is coupled with a reduction gear 5. The change of gears in the gearbox is executed with a manual gear lever that is not presented in the drawing.

The control system of the torque tool 1 comprises a torque measuring sensor 6, which is configured to measure the torsional deformations of an element of the reduction gear 5 of the torque tool 1 transferring the torque. Moreover, the torque sensor 6 is coupled with the controller 3, which is configured to correct the output control signal to the electric motor 2 on the basis of the signal from the torque sensor 6 of the actual torque. In particular, the torque sensor 6 is coupled with the controller 3 wirelessly, for example by using radio waves. What is more, the torque tool 1 comprises a resistance arm 7 and cap pin 8, in other words a working component through which the torque is transferred to a screw connection.

In the embodiment presented in Fig. 1, the torque sensor 6 is integrated with the reduction gear 5, which means that both its measuring component 6A as well as an electronic circuit of the torque sensor 6 are located within the reduction gear 5. In particular, Fig. 2 presents that the measuring component 6A of the torque sensor 6 is located on a body 10 of the reduction gear 5. In that embodiment, the torque sensor 6 with the measuring component 6A measures the value of torsional deformations of the body 10 of the reduction gear 5 and the torque is transferred to the body 10 through gear wheels of the reduction gear 5 from a shackle 9 of the reduction gear 5. The shackle 9 is connected with the cap pin 8, onto which a cap is put the size of which depends on the size of the screw component. On the other side, the same torque as in the body 10 of the reduction gear 5 is transferred to the resistance arm 7. A different embodiment, not presented in the drawing, is also possible, for example the measuring component 6A can be seated directly on the shackle 9.

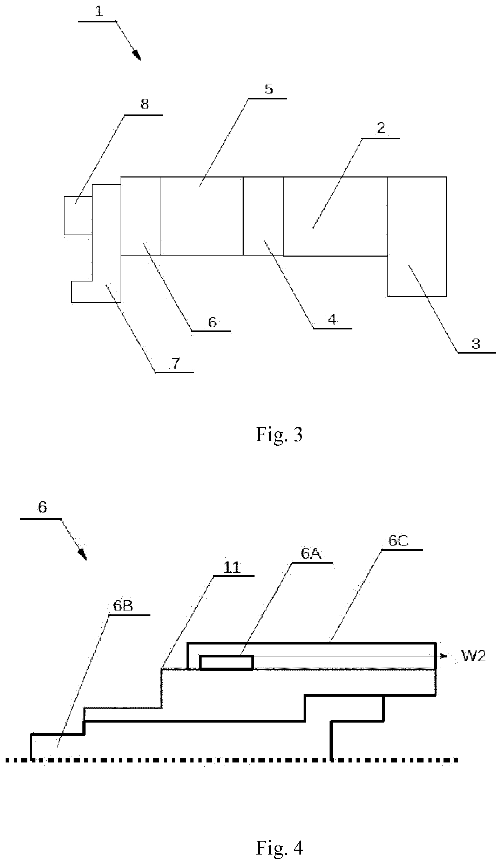

In another embodiment which is schematically shown in Fig. 3, the torque sensor 6 of the torque tool 1 is in form of a module attached on the reduction gear 5 and such module constitutes a separate component of the torque tool 1 and its components, especially a shackle 6B and a measuring sleeve 11, are mechanically coupled with components of the reduction gear 5 transferring the torque. In this embodiment, the measuring component 6A of the torque sensor 6 is fixed on the measuring sleeve 11 seated in a movable way on the shackle 6B of the torque sensor 6, for example by using a bearing that has not been presented in the drawing, and covered with a body 6C of the torque sensor 6 to protect the mechanical elements and electronic circuits against damage and external factors.

With reference to the above-mentioned exemplary embodiments, the most advantageous situation is when the measuring component 6A of the torque sensor 6 is in a form of a gauge meter, depending on the needs in the deflection compensation system, or in a system without deflection compensation system. It is also possible to apply other known measuring components, for example by using the phenomenon of magnetostriction or the phenomenon of surface acoustic wave SAW.

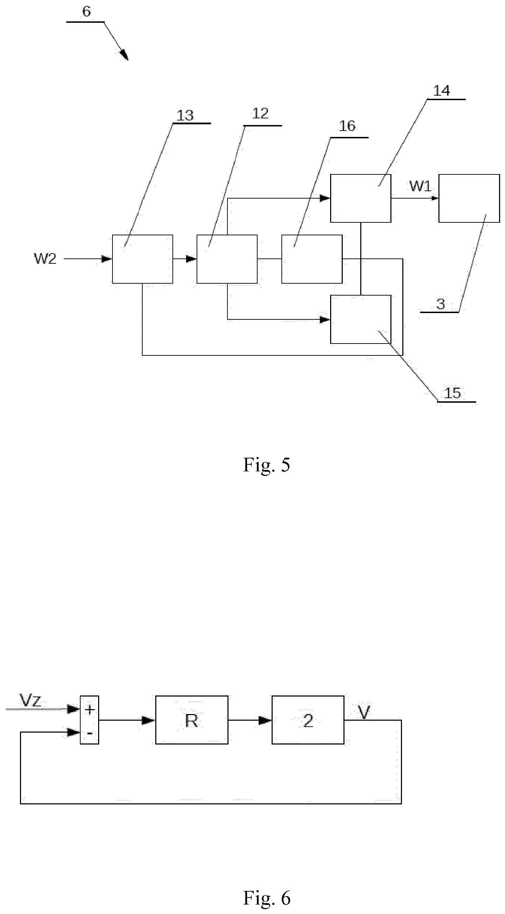

In Fig. 5, a block diagram has been presented for the torque measuring sensor 6, in which one may distinguish an electronic circuit 12 that manages the operation of the torque sensor, an electronic measuring system 13, an electronic radio communication system 14, an electronic user interface system 15, and an electronic power supply system 16.

Fig. 6 shows a single control loop with regulator R, which is configured to control the electric motor 2 when the measured torque assumes values lower than predefined torque threshold M_{P}. Regulator R is configured to maintain speed of the motor 2 running the reduction gear 5 through the gearbox 4 at desired speed V_{z}. The predefined torque threshold M_{P} should be understood as the empirically set value of the torque that falls within the range of 50% to 90% of desired torque M_{Z}, depending on the absolute value of the torque and the type and technical condition of the screw connection.

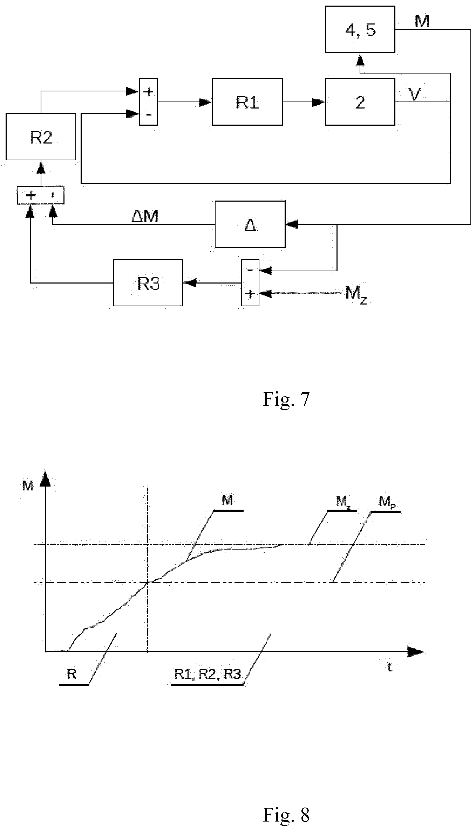

Fig. 7 shows an additional control loop, which means a cascade regulation system with regulator R1, regulator R2, and regulator R3, which are configured to control the motor 2 when the measured torque assumes values between the predefined torque_threshold M_{P} and the desired torque M_{Z}. In particular, regulator R3 is configured to monotonically decrease the difference between the desired torque M_{Z} and the measured torque M, regulator R2 is configured to decrease rate ΔM at which the torque increases proportionally to the difference between the measured torque M and the desired torque Mz, while regulator R1 is configured to decrease the speed of the motor 2 according to the signal from regulator R2.

The torque sensor 6 is used to measure the torsional deformation of the element of the reduction gear 5 transferring the torque and, on that basis, the applied torque is calculated. For that process, a known measurement filtering system, a power supply system, and other electronic circuits helpful in controlling the torque tool are used. The signal from the torque sensor 6 regarding the actual measurement of the torque is sent to the controller 3 and then, based on that signal, corrections are made in the output signal from the controller 3 to the electric motor 2.

The operator sets the desired torque on the controller, places the torque tool in a position appropriate for tightening and starts the tightening process. Torque M is measured during the tightening process and the tightening is stopped when the desired torque_is reached.

In particular, which is shown in Fig. 6 to Fig. 8, the motor 2 is accelerated by providing supply voltage with a value growing linearly or in another way over time, until the motor reaches working speed V. The working speed is determined for a particular type of screw connection and the desired tightening torque, while its value is calculated by the control system during configuration of desired torque M_{z}. The regulation system stabilizes the motor speed at the desired_working speed. The procedure lasts until the torque gain from the initial value exceeds the value calculated by the control system at the stage of configuration of the desired torque. The regulation system changes the desired value of speed to a value that is proportional to the difference between the temporary gain of torque and the value proportional to the difference between the temporary torque and desired_torque.

If the value of the tightening torque M is below the predefined torque threshold M_{P}, the controlling is performed in accordance with the diagram presented in Fig. 6, where regulator R controls the motor 2 in order to stabilize the difference between the desired speed V_{z} and the measured speed V at 0. If the value of the tightening torque is between the predefined torque threshold M_{P} and the desired torque M_{Z}, the control is performed according to the diagram shown in Fig. 7. The reduction gear 5 is run by the gearbox 4 and the motor 2 that rotates at speed V and generates torque M. The gain of rate ΔM is calculated between measurements. By using regulator R3, the difference between the desired torque M_{Z} and the measured torque M decreases monotonically. Regulator R2 decreases the rate at which torque increases proportionally to the difference between the measured torque M and the desired torque Mz, while regulator R1 decreases the speed of the motor 2 based on the signal from regulator R2.

### List of reference numbers in the drawing:

- 1 -: electric torque tool
- 2 -: motor
- 3 -: digital controller
- 4 -: gearbox
- 5 -: reduction gear
- 6 -: torque sensor
- 6A -: measuring component of the torque sensor
- 6B -: shackle
- 6C -: sensor body
- 7 -: resistance arm
- 8 -: cap pin
- 9 -: shackle of the reduction gear
- 10 -: body of the reduction gear
- 11 -: measuring sleeve
- 12 -: electronic circuit managing the torque sensor
- 13 -: electronic measurement system
- 14 -: electronic radio communication system
- 15 -: electronic user interface system
- 16 -: electronic power supply system
- W1 -: output signal from the torque sensor
- W2 -: output signal from the measuring component
- R, R1, R2, R3 -: regulators
- M -: measured torque
- M_{z} -: desired_torque
- M_{P} -: predefined torque threshold
- ΔM -: gain of the measured torque
- V_{Z} -: desired speed
- V -: measured speed of the motor

## Claims

1. A control system for a torque tool (1) provided for tightening and unscrewing of screw connections with adjustable torque, comprising a controller (3) of an electric motor (2) of the torque tool (1), further comprising a torque sensor (6), the torque sensor (6) is configured to measure the torsional deformations of an element of a reduction gear (5) of the torque tool (1) transferring the torque, and moreover the torque sensor (6) is coupled with the controller (3) which is configured to correct the output control signal to the electric motor (2) based on the signal from the torque sensor (6), **characterized in that** the control system comprises a single control loop with regulator R that is configured to control the electric motor (2) when the measured torque has values lower than a predefined torque threshold (M_{P}) in order to maintain the motor speed running the gearbox (4) at a desired speed (V_{z}), further comprising a cascade regulation system with regulator R1, regulator R2, and regulator R3, which are configured to control the motor (2) when the measured torque assumes values between the predefined torque threshold (M_{P}) and a desired torque (M_{Z}), whereas regulator R3 is configured to monotonically decrease the difference between the desired torque (M_{Z}) and the measured torque (M), regulator R2 is configured to decrease the rate at which the torque increases proportionally to the difference between the measured torque (M) and the desired torque (M_{Z}), and regulator R1 is configured to decrease the motor (2) speed according to the signal from regulator R2.

2. The control system of a torque tool according to claim 1, **characterized in that** the torque sensor (6) is coupled with the controller (3) wirelessly, preferably by using radio waves.

3. The control system of a torque tool according to claim 1 or 2, **characterized in that** the torque sensor (6) is in a form of a module put on the reduction gear (5), which is coupled with the element of the reduction gear (5) transferring the torque, and a measuring component (6A) of the torque sensor (6) is fixed on a measuring sleeve (11) seated movably on the torque sensor (6) shackle (6B).

4. The control system of a torque tool according to claim 1 or 2, **characterized in that** a measuring component (6A) of the torque sensor (6) is located on the body (10) of the reduction gear (5), while an electronic circuit of the torque sensor (6) is integrated with the reduction gear (5).

5. The control system of a torque tool according to one of the claims 1 - 4, **characterized in that** the measuring component (6A) of the torque sensor (6) is in the form of a strain gauge.

6. A method of controlling a torque tool provided for tightening and unscrewing screw connections with adjustable torque, in which the torsional deformations of a reduction gear (5) element in the torque tool (1) that transfers the torque are measured, while the signal from a torque sensor (6) of the actual measurement of the torque is sent to a controller (3), and further on the basis of that measurement signal the output signal from the controller (3) to an electric motor (2) running the torque tool (1) is corrected, **characterized in that** in the case in which the measured torque (M) assumes values lower than a predefined torque threshold (M_{P}), the motor (2) is controlled in a single control loop, in which a regulator R maintains the motor (2) speed running the reduction gear (5) through a gearbox (4) at a desired speed (V_{Z}), and when the measured torque (M) assumes values between the predefined torque threshold (Mp) and a desired torque (M_{Z}), the motor (2) is controlled with a cascade regulation system, in which a regulator R3 monotonically decreases the difference between the desired torque (M_{Z}) and the measured torque (M), while a regulator R2 decreases the rate at which the torque increases proportionally to the difference between the measured torque (M) and the desired torque (M_{Z}), while a regulator R1 decreases the motor (2) speed according to the signal from regulator R2.

7. The method according to claim 6, **characterized in that** the signal from the torque sensor (6) is sent to the controller (3) wirelessly, preferably via radio waves.

8. The method according to claim 6 or 7, **characterized in that** torsional deformations of the reduction gear (5) element that transfers the torque is measured with the use of a strain gauge.

9. The method according to one of the claims 6 - 8, **characterized in that** a tightening process is stopped once the measured torque (M) has the value equal to the desired torque (M_{Z}).

## Patentansprüche

1. Steuerungssystem für einen Schraubendreher (1) zum Auf- und Abschrauben von Schraubverbindungen mit einstellbarem Drehmoment, einschließlich einer Steuerung (3) zu einem Elektromotor (2) des Schraubendrehers (1) und ausgestattet mit einem Drehmomentsensor (6) zur Drehmomentmessung, wobei der Drehmomentsensor (6) konfiguriert ist, um Torsionsverformungen eines drehmomentübertragenden Elements eines Untersetzungsgetriebes (5) des Schraubendrehers (1) zu messen, und ferner der Drehmomentsensor (6) mit einer Steuerung (3) gekoppelt ist, und die Steuerung (3) ist so konfiguriert, dass sie das ausgehende Steuersignal an den Elektromotor (2) basierend auf dem Signal aus dem Drehmomentsensor (6) korrigiert, **dadurch gekennzeichnet, dass** das Steuerungssystem aus einem einzigen Regelkreis mit einem Regler R besteht, der den Elektromotor (2) ansteuert wenn das gemessene Drehmoment kleinere Werte als der Schwellwert (MP) annimmt, um die Drehzahl eines Motors, der ein Getriebe (4) antreibt, auf Drehzahlsollwert (Vz) zu halten, und ferner eine Kaskadensteuerung mit Regler R1, Regler R2 und Regler R3 umfasst, welche ausgelegt sind, den Motor (2) zu steuern, wenn das gemessene Drehmoment zwischen dem Schwellwert (MP) und einem Sollwert (MZ) liegt, wobei der Regler R3 so konfiguriert ist, dass er die Differenz zwischen dem eingestellten Drehmoment (MZ) und dem gemessenen Drehmoment (M) monoton verengt, der Regler R2 so konfiguriert ist, dass er die Geschwindigkeit der Drehmomenterhöhung proportional zur Differenz zwischen dem gemessenen Drehmoment (M) und dem eingestellten Drehmoment (MZ) verlangsamt, und der Regler R1 ist so konfiguriert, dass er die Drehzahl des Motors (2) gemäß einem Signal von dem Regler R2 reduziert.

2. Steuerungssystem eines Schraubendrehers nach Anspruch 1, **dadurch gekennzeichnet, dass** der Drehmomentsensor (6) drahtlos, vorzugsweise über Funkwellen, mit der Steuerung (3) gekoppelt ist.

3. Steuerungssystem eines Schraubendrehers nach Anspruch 1 oder 2, **dadurch gekennzeichnet, dass** der Drehmomentsensor (6) die Form eines auf das Untersetzungsgetriebe (5) aufgebrachten Moduls hat, das mit dem drehmomentübertragenden Element des Untersetzungsgetriebes (5) gekoppelt ist, und das Messelement (6A) des Drehmomentsensors (6) auf einer Messhülse (11) befestigt ist, welche beweglich auf einem Joch (6B) des Drehmomentsensors (6) gelagert ist.

4. Steuerungssystem eines Schraubendrehers nach Anspruch 1 oder 2, **dadurch gekennzeichnet, dass** sich das Messelement (6A) des Drehmomentsensors (6) am Gehäuse (10) des Untersetzungsgetriebes (5) befindet und die elektronische Schaltung des Drehmomentsensors (6) mit dem Untersetzungsgetriebe (5) integriert ist.

5. Steuerungssystem eines Schraubendrehers nach einem der Ansprüche 1 - 4, **dadurch gekennzeichnet, dass** das Messelement (6A) des Drehmomentsensors (6) als Dehnungsmessstreifen ausgebildet ist.

6. Verfahren zur Steuerung eines Schraubendrehers zum Auf- und Abschrauben von Schraubverbindungen mit einstellbarem Drehmoment, bei dem die Torsionsverformungen eines drehmomentübertragenden Elements eines Untersetzungsgetriebes (5) des Schraubendrehers (1) gemessen werden, und das Messsignal des Drehmomentsensors (6) der aktuellen Drehmomentmessung an die Steuerung (3) versendet und dann auf Basis dieses Messsignals das Ausgangssignal der Steuerung (3) an den Schraubendreher (1) antreibenden Elektromotor (2) korrigiert wird, **dadurch gekennzeichnet, dass** für einen Fall, wenn das gemessene Drehmoment (M) Werte annimmt, die niedriger als der Schwellwert (MP) sind, wird der Motor (2) in einem einzigen Regelkreis gesteuert, in dem der Regler R die Drehzahl des Motors (2) hält, der das Untersetzungsgetriebe (5) über ein Getriebe (4) mit der Drehzahlsollwert (VZ) antreibt, während das gemessene Drehmoment (M) Werte annimmt, die zwischen dem Schwellwert (MP) und dem eingestellten Drehmoment (MZ) liegen, wird der Motor (2) durch die Kaskadenregelung gesteuert, wobei der der Regler R3 die Differenz zwischen dem eingestellten Drehmoment (MZ) und dem gemessenen Drehmoment (M) monoton reduziert, und der Regler R2 die Drehzahl des Drehmomentanstiegs proportional zur Differenz zwischen dem gemessenen Drehmoment (M) und dem eingestellten Drehmoment (MZ) vermindert, während der Regler R1 die Drehzahl des Motors (2) entsprechend dem Signal vom Regler R2 reduziert.

7. Verfahren nach Anspruch 6, **dadurch gekennzeichnet, dass** das Signal des Drehmomentsensors (6) drahtlos, vorzugsweise über Funkwellen, an die Steuerung (3) übertragen wird.

8. Verfahren nach Anspruch 6 oder 7, **dadurch gekennzeichnet, dass** die Torsionsverformungen eines drehmomentübertragenden Elements des Untersetzungsgetriebes (5) mittels eines Dehnungsmessstreifenelements gemessen wird.

9. Verfahren nach einem der Ansprüche 6 - 8, **dadurch gekennzeichnet, dass** im Moment, wenn die Werte des gemessenen Drehmoments (M) und des eingestellten Drehmoments (MZ) gleich sind, der Schraubvorgang unterbrochen wird.

## Revendications

1. Le système de commande d'une visseuse (1) destinée à visser et à dévisser les assemblages boulonnés à couple réglable, comprenant un contrôleur (3) du moteur électrique (2) de la visseuse (1) et muni d'un capteur (6) de mesure de couple, où le capteur (6) de couple est configuré pour mesurer les déformations en torsion de l'élément du réducteur de vitesse (5) de la visseuse (1) qui transmet le couple, et en outre le capteur (6) de couple est couplé à un contrôleur (3) qui lui-même est configuré pour corriger le signal de commande sortant vers le moteur électrique (2) selon le signal provenant du capteur (6) de couple, **caractérisé en ce que** le système de commande comprend un circuit de réglage unique avec un régulateur R qui est configuré pour commander le moteur électrique (2), lorsque le couple mesuré prend des valeurs inférieures à la valeur seuil (Mp), pour maintenir la vitesse du moteur entraînant le réducteur de vitesse par l'intermédiaire de la boîte de vitesse (4) à la valeur de vitesse de consigne (Vz), et comprend en outre un système de commande en cascade avec un régulateur R1, un régulateur R2 et un régulateur R3 qui sont configurés pour commander le moteur (2) lorsque le couple mesuré prend des valeurs entre une valeur seuil (Mp) et une valeur de consigne (Mz), de sorte que le régulateur R3 est configuré pour diminuer de façon monotone la différence entre le couple de consigne (Mz) et le couple mesuré (M), le régulateur R2 est configuré pour diminuer la vitesse de la montée du couple relativement à la différence entre le couple mesuré (M) et le couple de consigne (Mz), tandis que le régulateur R1 est configuré pour diminuer la vitesse du moteur (2) selon le signal du régulateur R2.

2. Le système de commande de la visseuse selon la revendication 1, **caractérisé en ce que** le capteur (6) de couple est couplé au contrôleur (3) sans fil, de préférence au moyen d'ondes radio.

3. Le système de commande de la visseuse selon la revendication 1 ou 2, **caractérisé en ce que** le capteur (6) de couple est sous forme de module installé sur le réducteur de vitesse (5), qui est couplé à l'élément du réducteur de vitesse (5) qui transmet le couple, et l'élément de mesure (6A) du capteur (6) de couple est fixé sur un manchon de mesure (11) monté de façon mobile sur l'étrier (6B) du capteur (6) de couple.

4. Le système de commande de la visseuse selon la revendication 1 ou 2, **caractérisé en ce que** l'élément de mesure (6A) du capteur (6) de couple est situé sur le boîtier (10) du réducteur de vitesse (5), tandis que le circuit électronique du capteur (6) de couple est intégré au réducteur de vitesse (5).

5. Le système selon l'une des revendications. 1 -4, **caractérisé en ce que** l'élément de mesure (6A) du capteur (6) de couple est sous la forme de jauge de déformation.

6. La méthode de commande d'une visseuse destinée à visser et à dévisser les assemblages boulonnés à couple réglable, dans lequel les déformations en torsion de l'élément du réducteur de vitesse (5) de la visseuse (1) qui transmet le coupe sont mesurées, et le signal provenant du capteur (6) de couple de masure réelle du couple est transmis au contrôleur (3), puis, sur la base de ce signal de mesure, le signal de sortie du contrôleur (3) vers le moteur électrique (2) entraînant la visseuse (1) est ajusté, **caractérisée en ce que** lorsque le couple mesuré (M) prend des valeurs inférieures à la valeur seuil (Mp) le moteur (2) est commandé dans un seul circuit de réglage, dans lequel le régulateur R maintient la vitesse du moteur (2) entraînant le réducteur de vitesse (5) par l'intermédiaire de la boîte de vitesses (4) à la valeur de vitesse de consigne (Vz), tandis que le couple mesuré (M) prend des valeurs comprises entre la valeur seuil (Mp) et la valeur de consigne (Mz), le moteur (2) est commandé au moyen d'un système de commande en cascade dans lequel le régulateur R3 diminue de façon monotone la différence entre le couple de consigne (Mz) et le couple mesuré (M), et le régulateur R2 diminue la vitesse de la montée du couple relativement à la différence entre le couple mesuré (M) et le couple de consigne (Mz), tandis que le régulateur R1 diminue la vitesse du moteur (2) selon le signal du régulateur R2.

7. La méthode selon la revendication 6, **caractérisée en ce que** le signal du capteur (6) de couple est transmis au contrôleur (3) sans fil, de préférence au moyen d'ondes radio.

8. La méthode selon la revendication 6 ou 7, **caractérisée en ce que** les déformations en torsion de l'élément du réducteur de vitesse (5) qui transmet le coupe sont mesurées à l'aide d'un élément de mesure extensométrique.

9. La méthode selon l'une des revendication 6 - 8 **caractérisée en ce que** lorsque le couple (M) mesuré est égal à la valeur du couple de consigne (Mz), le processus de vissage est interrompu.
